Europäisches Patentamt

European Patent Office

Office européen des brevets

(19)

(11) EP 0 863 407 A1

(12) ## DEMANDE DE BREVET EUROPEEN

(43) Date de publication:
09.09.1998 Bulletin 1998/37

(51) Int Cl.$^6$: G01S 3/14

(21) Numéro de dépôt: 98400482.0

(22) Date de dépôt: 02.03.1998

(84) Etats contractants désignés:
AT BE CH DE DK ES FI FR GB GR IE IT LI LU MC NL PT SE
Etats d'extension désignés:
AL LT LV MK RO SI

(30) Priorité: 04.03.1997 FR 9702569

(71) Demandeur: ALCATEL ALSTHOM COMPAGNIE GENERALE D'ELECTRICITE
75008 Paris (FR)

(72) Inventeurs:
• Bourgeois, Alain
  95600 Eaubonne (FR)
• Bleret, Jean
  78290 Croissy (FR)

(74) Mandataire: Smith, Bradford Lee et al
COMPAGNIE FINANCIERE ALCATEL
Dépt. Propr. Industrielle,
30, avenue Kléber
75116 Paris (FR)

(54) **Antenne pour l'émission et/ou la réception de signaux à polarisation rectiligne**

(57) L'antenne destinée à la réception et/ou l'émission de signaux à polarisation rectiligne comporte au moins un premier élément rayonnant (24, 26) à polarisation circulaire dans un sens et au moins un second élément rayonnant (28, 30) à polarisation circulaire dans l'autre sens.

Les signaux, d'amplitudes sensiblement égales, fournis par les éléments rayonnants de polarisation circulaire en sens contraires sont combinés pour fournir un signal à polarisation rectiligne. La direction de cette polarisation rectiligne est fonction du déphasage ($\Delta\varphi$) entre les signaux combinés. Un déphaseur (32) permet de régler la direction de polarisation de l'antenne. Le réglage peut être automatisé.

FIG.3

## Description

L'invention est relative à une antenne pour l'émission et/ou la réception de signaux à polarisation rectiligne.

Dans le domaine des télécommunications, pour une fréquence porteuse déterminée, on transmet souvent des signaux ayant des polarisations différentes. On dispose, ainsi, pour une même porteuse, de deux canaux transmettant des informations différentes. Si la polarisation est circulaire, un canal est affecté aux signaux à polarisation circulaire droite et l'autre canal est affecté aux signaux ayant une polarisation en sens contraire, c'est-à-dire une polarisation circulaire gauche. Si la polarisation est de type rectiligne, un canal transmet selon une polarisation dite "parallèle" (ou "horizontale"), et l'autre canal transmet des signaux avec une polarisation perpendiculaire (ou "verticale").

En général, les antennes, en particulier les antennes au sol, sont destinées à recevoir et/ou émettre des signaux provenant d'une même direction et avec une polarisation déterminée. Ainsi une antenne, d'une part, doit être pointée convenablement vers la source d'émission et, d'autre part, doit, dans le cas d'une polarisation rectiligne, être orientée autour de son axe, de façon que la réception du signal à polarisation rectiligne soit maximale.

Par exemple, quand une antenne est destinée à recevoir des signaux d'un satellite géostationnaire, l'axe de l'antenne doit être pointé vers ce satellite et son orientation autour de son axe doit permettre la maximisation du signal reçu.

Le réglage d'une antenne destinée à des signaux à polarisation rectiligne doit être particulièrement soigné. En effet, si le réglage est défectueux, l'antenne émet à la fois dans la polarisation désirée et dans la polarisation perpendiculaire, ce qui provoque l'émission de signaux perturbateurs qui peuvent être reçus par d'autres récepteurs destinés à cette polarisation perpendiculaire. Les normes imposent en général qu'une antenne, émettant selon une polarisation rectiligne de direction déterminée, ne puisse émettre selon la polarisation rectiligne perpendiculaire qu'avec un niveau ne dépassant pas une limite ; ce niveau limite est atteint pour une antenne dont l'orientation angulaire s'écarte seulement d'environ 1° de son orientation optimale.

Jusqu'à présent, le réglage en polarisation de l'antenne est effectué manuellement.

On a constaté que le résultat de ce réglage n'est pas toujours satisfaisant. En outre, il peut varier au cours du temps.

De plus, la vérification du réglage de l'antenne est obtenue seulement avec la constatation que le signal reçu présente les qualités attendues. Par exemple, quand on reçoit un signal de télévision, on estimera que le réglage est correct quand la qualité de l'image sera satisfaisante. Mais ce type de vérification est parfois insuffisant, notamment dans le cas où l'antenne est destinée à émettre.

L'invention remédie à ces inconvénients. Elle fournit une antenne pourvue de moyens permettant un réglage simple, de préférence automatique, de son orientation à l'égard de la polarisation rectiligne qu'elle est destinée à recevoir et/ou émettre.

L'antenne selon l'invention est caractérisée en ce qu'elle comporte au moins deux éléments rayonnants dont l'un est à polarisation circulaire droite et l'autre à polarisation circulaire gauche, les deux éléments étant alimentés par des signaux sensiblement de même amplitude, un moyen étant prévu pour déphaser l'un par rapport à l'autre les signaux d'alimentation des éléments et pour faire varier ce déphasage afin de faire varier la direction de polarisation rectiligne résultant de la combinaison des signaux déphasés.

L'invention est basée sur la constatation que la combinaison de deux signaux de même amplitude et à polarisation circulaire de sens contraires fournit un signal de polarisation rectiligne, cette polarisation étant inclinée d'un angle $\theta$, par rapport à un axe de l'antenne, qui est égal à la moitié du déphasage entre les signaux. Cette propriété sera expliquée plus loin.

L'invention fournit donc un moyen permettant le réglage de l'orientation de l'antenne, en fonction de la direction de polarisation rectiligne du signal à recevoir ou à émettre, qui est plus simple et plus fiable qu'un réglage de type mécanique.

Pour effectuer ce réglage, on détecte un signal de polarisation perpendiculaire (ou polarisation croisée) et on choisit le déphasage qui fournit le niveau minimum de signal pour cette polarisation croisée. En effet, un réglage basé sur le minimum de polarisation croisée est beaucoup plus précis qu'un réglage basé sur la recherche du maximum de la polarisation voulue.

Le réglage peut être aisément automatisé.

Un réglage effectué sur des signaux reçus est également valable pour l'émission à condition que la bande de fréquences des signaux émis soit voisine de la bande des signaux reçus. Par exemple, si la réception s'effectue à une fréquence porteuse de 4 gigahertz et l'émission sur une fréquence porteuse de 6 gigahertz, le réglage en réception sera également valable pour l'émission.

Le réglage est effectué soit à l'aide d'un signal de référence provenant de la station émettrice, par exemple un satellite géostationnaire, soit à l'aide du signal utile reçu. Dans ce dernier cas, le réglage peut être effectué de façon automatique en permanence, par exemple au début de chaque communication.

Dans un mode de réalisation, on prévoit un moyen pour indiquer qu'un réglage correct de l'orientation de l'antenne à l'égard de la direction de polarisation rectiligne ne peut être obtenu. Par exemple, si le minimum du signal reçu en polarisation croisée dépasse un seuil prédéterminé, un signal d'alarme est émis. Il est, en effet, préférable que l'utilisateur soit informé de cette situation, car, dans ce cas, il risque d'émettre un signal polluant. En variante, ou en complément, de cette disposition, un moyen est prévu pour interdire automatiquement l'émission quand le minimum du signal en polarisation croisée dépasse un seuil.

Le nombre d'éléments rayonnants à polarisation circulaire gauche et droite n'est pas limité à l'unité. Il peut être plus important. La seule contrainte est que le nombre d'éléments à polarisation circulaire gauche soit égal au nombre d'éléments à polarisation circulaire droite et que les signaux appliqués sur ces éléments de polarisation en sens contraires aient sensiblement la même amplitude.

Lorsque le nombre d'éléments à polarisation circulaire dans chaque sens est au moins égal à deux, on peut utiliser ces éléments en antenne active pour effectuer un réglage fin du pointage, c'est-à-dire de la direction de l'axe de l'antenne.

Pour régler le pointage, on peut rechercher soit un maximum de signal dans l'axe de l'antenne, soit un minimum dans l'axe de l'antenne.

Pour rechercher un minimum, notamment un signal nul, on alimente les quatre éléments rayonnants par exemple par des signaux de même amplitude, mais de phases régulièrement espacées, par exemple 0°, 90°, 180° et 270°.

Le mode de réalisation préféré concerne une antenne à réflecteur, les éléments rayonnants se trouvant au foyer de ce réflecteur.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma montrant un système de télécommunication faisant appel à une antenne selon l'invention,
la figure 2 est un schéma d'une antenne à laquelle s'applique l'invention,
les figures 3 et 4 sont des schémas montrant une partie de l'antenne conforme à l'invention,
la figure 5 est un diagramme servant à expliquer le fonctionnement de l'antenne selon l'invention, et
la figure 6 est un schéma servant aussi à expliquer un aspect du fonctionnement de l'antenne conforme à l'invention.

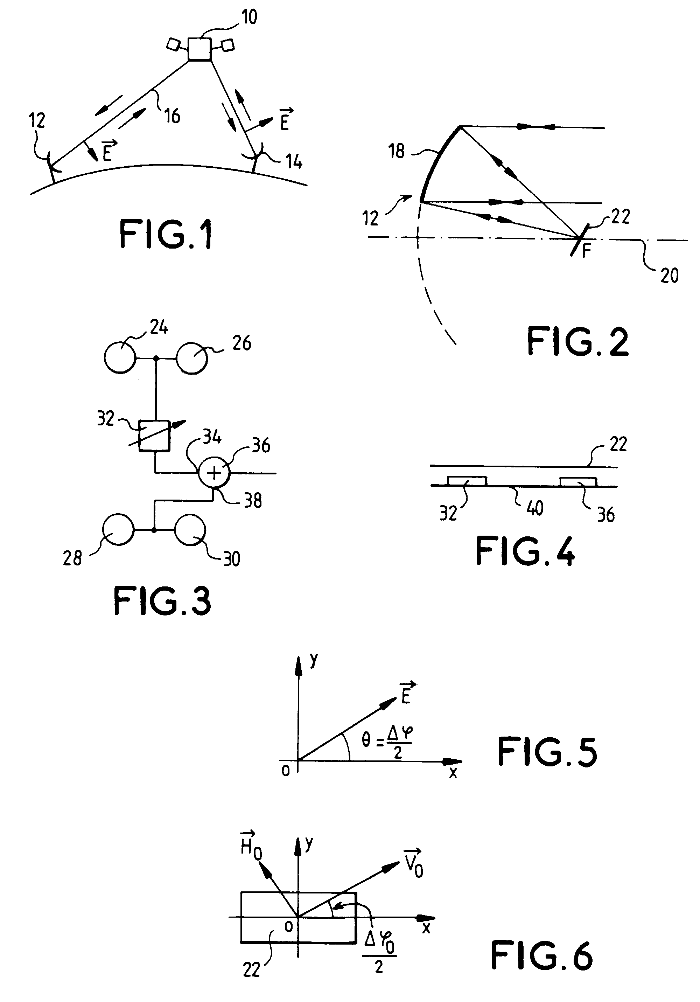

L'exemple que l'on va décrire en relation avec les figures concerne un système de télécommunication dans lequel un satellite géostationnaire 10 (figure 1) est en communication avec une pluralité de stations au sol dont chacune comporte une antenne 12, 14, etc. Les informations transmises sont, par exemple, des communications téléphoniques. La transmission des signaux de chaque station terrestre 12, 14 vers le satellite 10 s'effectue suivant une fréquence porteuse de 6 gigahertz, alors que les signaux transmis du satellite vers les stations terrestres s'effectue sur une fréquence porteuse de 4 gigahertz.

Dans ce qui suit, on appellera quelquefois les signaux émis par les stations terrestres vers le satellite des "signaux montants" et les signaux émis depuis le satellite 10 vers les stations terrestres seront appelés des "signaux descendants".

Tous ces signaux présentent une polarisation rectiligne. On rappelle ici qu'un signal à polarisation rectiligne est un signal pour lequel le vecteur champ électrique $\vec{E}$, qui est toujours perpendiculaire à la direction 16 de propagation, se propage parallèlement à lui-même. On utilise cette propriété de polarisation des signaux de façon à transmettre, pour une fréquence porteuse donnée, des informations de types différents sur deux polarisations orthogonales. Une polarisation est souvent appelée la polarisation "horizontale", et la polarisation perpendiculaire, ou croisée, est souvent appelée la polarisation "verticale", même si le vecteur $\vec{E}$ n'a ni la direction horizontale, ni la direction verticale.

Un problème que cherche à résoudre l'invention est de faciliter le réglage des antennes 12, 14 pour la réception d'un signal suivant la polarisation voulue, par exemple la polarisation horizontale.

Une antenne comporte en général un réflecteur 18 (figure 2) au foyer F duquel se trouvent des éléments rayonnants (récepteurs/émetteurs). L'axe 20 de l'antenne 12 doit bien entendu être dirigé vers la station avec laquelle elle doit communiquer, c'est-à-dire vers le satellite 10 dans l'exemple. Le réglage de la direction de l'axe 20, qui doit coïncider avec la direction 16 (figure 1), s'appelle le "pointage" de l'antenne.

Par ailleurs, il est nécessaire d'orienter les éléments rayonnants se trouvant sur un support 22 au foyer F du réflecteur 18, autour de l'axe 20 pour qu'il reçoive la polarisation H voulue et non la polarisation V croisée.

L'invention propose un moyen simple et efficace pour effectuer ce dernier réglage.

A cet effet, on prévoit, sur le support 22, des éléments rayonnants 24, 26 à polarisation circulaire droite et des éléments rayonnants 28, 30 à polarisation circulaire gauche (figure 3). Les éléments rayonnants 24, 26 sont connectés ensemble à la première entrée 34 d'un additionneur 36 par l'intermédiaire d'un déphaseur 32 fournissant une valeur de déphasage variable. La seconde entrée 38 de l'additionneur 36 reçoit les signaux fournis par les éléments rayonnants 28, 30 à polarisation circulaire gauche.

Comme expliqué ci-après, sur la sortie de l'additionneur 36, on obtient un signal à polarisation rectiligne qui est orienté d'un angle $\theta$ déterminé par rapport à un axe Ox dans le plan de la plaque 22. Cet angle $\theta$ est fonction du déphasage $\Delta\varphi$ entre les signaux sur les entrées 34 et 38 de l'additionneur 36.

On rappelle ici qu'un signal à polarisation circulaire est un signal pour lequel le champ électrique $\vec{E}$ tourne à vitesse uniforme autour de l'axe de propagation. Cette rotation autour de l'axe de propagation s'effectue dans un sens déterminé, à droite ou à gauche.

Le signal sur la première entrée 34 de l'additionneur 36 présente un vecteur de polarisation $E_1$ ayant la valeur complexe suivante :

$$(1) \qquad E_1 = (x + jy)e^{j\Delta\varphi}$$

Dans cette formule : x est l'abscisse du vecteur champ électrique, y son ordonnée dans le repère xOy dans le plan de la plaque 22 (figures 5 et 6), j est le nombre imaginaire tel que $j^2 = -1$ et $\Delta\varphi$ est le déphasage conféré par le déphaseur 32.

Sur l'entrée 38 de l'additionneur 36, on obtient un signal dont le vecteur de polarisation $E_2$ a la valeur complexe suivante :

$$(2) \qquad E_2 = x - jy$$

Les composantes x et y du vecteur $E_2$ sont les mêmes que celles du vecteur $E_1$ car les amplitudes de ces signaux sont les mêmes.

L'addition de ces deux valeurs, c'est-à-dire l'addition des vecteurs $E_1$ et $E_2$, est un vecteur d'abscisse X et d'ordonnée Y tels que :

$$(3) \qquad X = 1 + e^{j\Delta\varphi} = \sqrt{2(1+\cos\Delta\varphi)}\; e^{j\frac{\Delta\varphi}{2}} = 2\cos\frac{\Delta\varphi}{2}\cdot e^{j\frac{\Delta\varphi}{2}}$$

$$(4) \qquad Y = -j\left(1 - e^{j\Delta\varphi}\right) = \sqrt{2(1-\cos\Delta\varphi)}\cdot e^{j\frac{\Delta\varphi}{2}} = 2\sin\frac{\Delta\varphi}{2}\cdot e^{j\frac{\Delta\varphi}{2}}$$

Les formules (3) et (4) ci-dessus montrent que le champ électrique $\vec{E}$ (figure 5) du signal à la sortie de l'additionneur 36 a une amplitude constante et forme un angle $\theta = \Delta\varphi/2$ avec l'axe Ox. On voit donc que le réglage du déphasage $\Delta\varphi$ permet de faire varier la direction privilégiée de polarisation de l'antenne.

En général, l'antenne est réglée en usine de façon que la direction de la polarisation corresponde au site où doit se trouver l'antenne, c'est-à-dire que l'antenne est préréglée de façon que la polarisation horizontale ou la polarisation verticale forme un angle déterminé avec l'axe Ox. Ce préréglage correspond aux vecteurs $\vec{V}_0$ et $\vec{H}_0$ sur la figure 6. Dans ce cas, l'angle entre le vecteur $\vec{V}_0$ et l'axe Ox est égal à $\Delta\varphi_0/2$.

Le déphaseur 32 permet d'effectuer les réglages précis lors de l'installation de l'antenne ou ultérieurement. Pour ce réglage, on procède de la façon suivante :

On rappelle tout d'abord que les circuits associés à l'antenne comportent souvent, d'une part, une entrée pour les signaux à émettre, à savoir une entrée pour les signaux à polarisation H et, d'autre part, une ou deux sorties pour les signaux reçus, c'est-à-dire une sortie pour les signaux à polarisation H et éventuellement une sortie pour les signaux à polarisation V.

Pour le réglage, on connecte l'antenne sur la polarisation perpendiculaire à la polarisation pour laquelle l'antenne doit être réglée. Dans l'exemple, où l'on considère que l'antenne est à régler pour la polarisation H, on connectera donc l'antenne sur l'entrée de réception de la polarisation V et on effectuera le réglage de manière à minimiser le signal reçu. On sait, en effet, qu'au voisinage du minimum en polarisation perpendiculaire, le gradient de variation est très important, c'est-à-dire que le réglage peut être très précis, alors qu'au contraire, au voisinage du maximum de la polarisation normale, la variation est lente, ce qui ne permettrait pas un réglage précis si on effectuait ce réglage au voisinage de ce maximum.

Pour le minimum en polarisation perpendiculaire, le déphasage a une valeur $\Delta\varphi_1$. Pour obtenir le déphasage pour la polarisation H, on ajoute un déphasage de 180° (c'est-à-dire une rotation de 90° pour le vecteur champ électrique).

Ce réglage s'effectue de préférence de manière automatique, par exemple à l'aide : d'un commutateur qui commute le signal reçu de l'entrée H, correspondant à l'utilisation usuelle, à l'entrée V pour le réglage ; d'un moyen pour faire varier automatiquement le déphasage introduit par le déphaseur 32 ; et d'un dérivateur pour détecter le minimum du signal sur la sortie de l'additionneur 36 ; ainsi qu'à l'aide de moyens pour garder dans une mémoire, la valeur $\Delta\varphi_1$ du déphasage, augmentée de 180°, qui correspond au minimum fourni par le dérivateur. Une fois le réglage effectué, le commutateur ramène le signal reçu de l'entrée V vers l'entrée H. On notera qu'il n'est pas indispensable de prévoir une entrée V accessible de l'extérieur.

Le réglage est par exemple effectué une fois pour toutes à l'aide d'un signal de référence émis par le satellite géostationnaire 10.

En variante, le réglage est effectué à l'aide du signal utile, c'est-à-dire un signal habituel, par exemple un signal téléphonique reçu.

Dans certains systèmes, quand une station 12 émet des signaux montants vers le satellite 10, elle reçoit, en retour, après transposition, un signal descendant du satellite 10 correspondant au signal émis. Dans ce cas, le réglage sur le signal de retour permet d'optimiser le réglage de polarisation pour l'émission.

Dans un mode de réalisation avantageux, la procédure de réglage est utilisée pour effectuer un contrôle du fonctionnement correct de l'antenne de façon à émettre un signal d'alarme et/ou provoquer un arrêt de l'émission en cas de mauvais fonctionnement.

De façon plus précise, les circuits procèdent automatiquement, de façon périodique, à la procédure de réglage de l'orientation de polarisation de l'antenne. Si le minimum de signal en polarisation croisée dépasse un seuil, un signal d'alarme est émis et/ou l'émission est interdite. En effet, dans ce cas, l'antenne émet un signal perturbateur en polarisation croisée, ce qui est inadmissible pour certaines applications.

L'antenne à éléments rayonnants représentée sur la figure 3 est une antenne active. La présence de ces éléments rayonnants peut être utilisée pour effectuer un réglage fin du pointage, c'est-à-dire de la direction selon laquelle l'antenne émet ou reçoit.

Bien qu'on ait décrit seulement deux éléments rayonnants à polarisation circulaire gauche et deux éléments rayonnants à polarisation circulaire droite, il va de soi que l'invention n'est pas limitée à ce nombre. Le nombre d'éléments rayonnants de chaque catégorie est au moins égal à 1. Ce nombre et la répartition des éléments rayonnants sont fonction principalement de la configuration du réflecteur et de la directivité souhaitée. Les réseaux d'éléments rayonnants seront différents selon qu'on a affaire à un réflecteur de révolution ou à un réflecteur à structure excentrée, comme représenté sur la figure 2, ou, enfin, à une antenne à double réflecteur.

Les éléments représentés sur la figure 3 correspondent aux éléments rayonnants prévus pour la réception. On prévoit des éléments analogues pour l'émission.

Dans l'exemple représenté sur la figure 4, les éléments rayonnants sont déposés sur une plaque ou substrat rectangulaire 22. Ils sont sous forme de conducteurs pleins de type "patch". Le déphaseur 32 et l'additionneur 34 et d'autres éléments du circuit sont disposés sur un autre substrat 40, le couplage entre les éléments rayonnants 22 et les circuits sur le substrat 40 s'effectuant par couplage sans contact.

Bien que les éléments rayonnants forment une antenne active permettant un réglage électronique de la direction de polarisation et le pointage, on peut combiner ces dispositions avec un système à moteur (non montré) permettant d'asservir la direction de pointage de l'antenne au satellite, le réglage électronique étant principalement un réglage fin.

Le réglage automatique de l'antenne peut s'effectuer de façon périodique pendant des périodes de réception d'un signal utile au cours desquelles ce signal ne transporte pas d'information utile. Par exemple une transmission par paquets de signaux numériques comporte de telles périodes (entre la transmission de paquets).

L'invention n'est pas limitée à une antenne d'émission/réception. Elle concerne aussi un procédé pour engendrer des signaux à polarisation rectiligne qui est caractérisé en ce qu'on combine des signaux à polarisation circulaire en sens contraires ayant des amplitudes sensiblement égales. De préférence, on impose un déphasage à ces signaux combinés de façon à imposer une direction à la polarisation rectiligne.

**Revendications**

1. Antenne destinée à la réception et/ou l'émission de signaux à polarisation rectiligne, caractérisée en ce qu'elle comporte au moins un premier élément rayonnant (24, 26) à polarisation circulaire dans un sens et au moins un second élément rayonnant (28, 30) à polarisation circulaire dans l'autre sens, les signaux, d'amplitudes sensiblement égales, fournis par les éléments rayonnants de polarisation circulaire en sens contraires étant combinés pour fournir un signal à polarisation rectiligne, la direction de cette polarisation rectiligne étant fonction du déphasage ($\Delta\varphi$) variable entre les signaux combinés.

2. Antenne selon la revendication 1, caractérisée en ce qu'elle comprend au moins deux éléments à polarisation circulaire dans un sens et au moins deux éléments à polarisation circulaire dans l'autre sens.

3. Antenne selon la revendication 2, caractérisée en ce que des moyens sont prévus pour utiliser les éléments rayonnants afin de régler la direction de pointage (16) de l'antenne.

4. Antenne selon la revendication 1, 2 ou 3, caractérisée en ce que le déphasage entre les signaux à polarisation circulaire en sens contraires est réglable de façon à régler la direction de polarisation de l'antenne.

5. Antenne selon la revendication 4, caractérisée en ce qu'elle comporte un moyen pour faire varier automatiquement le déphasage, un moyen de mesure de signaux reçus, et un moyen pour arrêter la variation du déphasage quand un signal reçu est optimisé.

6. Antenne selon la revendication 5, caractérisée en ce que le réglage du déphasage est effectué de façon à minimiser le signal reçu dans la polarisation perpendiculaire à la polarisation souhaitée.

7. Antenne selon la revendication 5 ou 6, caractérisée en ce que le réglage est effectué à l'aide d'un signal utile reçu.

8. Antenne selon l'une quelconque des revendications 5 à 7, caractérisée en ce que le réglage du déphasage est effectué de façon automatique et périodique.

9. Antenne selon l'une quelconque des revendications précédentes, caractérisée en ce qu'elle comporte un additionneur (36) recevant, sur une entrée (34), le signal fourni par la sortie d'un déphaseur (32) à phase variable dont l'entrée reçoit des signaux d'un élément rayonnant (24, 26) à polarisation circulaire dans un sens, l'autre entrée (38) de l'additionneur (36) recevant, sans déphasage, les signaux de l'élément rayonnant (28, 30) à polarisation circulaire dans l'autre sens.

10. Antenne selon la revendication 6, caractérisée en ce qu'elle comporte des moyens pour émettre un signal d'alarme et/ou empêcher l'émission lorsque le minimum du signal reçu en polarisation perpendiculaire à la polarisation souhaitée dépasse un seuil.

11. Antenne selon l'une quelconque des revendications précédentes, caractérisée en ce que les éléments rayonnants sont disposés sur un substrat (22) au foyer d'un réflecteur (18).

12. Procédé pour engendrer un signal à polarisation rectiligne, caractérisé en ce qu'on combine des signaux à polarisation circulaire en sens contraires ayant sensiblement la même amplitude, chacun de ces signaux étant fourni par au moins un élément rayonnant respectif, et en ce qu'on déphase un signal à polarisation circulaire par rapport au signal à polarisation circulaire en sens contraire, la direction de la polarisation rectiligne étant fonction de ce déphasage.

13. Procédé selon la revendication 12, caractérisé en ce que les signaux à polarisation circulaire dans un sens sont fournis par au moins deux éléments rayonnants et les signaux à polarisation circulaire dans l'autre sens sont fournis par également au moins deux éléments rayonnants, et en ce qu'on utilise ces éléments rayonnants en antenne active pour effectuer un réglage fin du pointage, c'est-à-dire de la direction de l'axe, de l'antenne.

FIG.1

FIG.2

FIG.3

FIG.4

FIG.5

FIG.6

**Office européen des brevets**

**RAPPORT DE RECHERCHE EUROPEENNE**

Numéro de la demande

EP 98 40 0482

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | US 3 373 433 A (BLAISDELL) 12 mars 1968 <br> * colonne 3, ligne 8 - ligne 16; figures 1-3 * | 1 | G01S3/14 |
| Y | EP 0 437 190 A (INTERNATIONAL TELECOMMUNICATIONS SATELLITE ORGANIZATION) 17 juillet 1991 <br> * abrégé; figure 2 * <br> * colonne 3, ligne 51 - colonne 4, ligne 46 * | 1 | |
| Y | US 2 953 781 A (DONNELLAN ET AL.) 20 septembre 1960 <br> * colonne 3, ligne 19 - ligne 36; figure 1 * | 1-3 | |
| Y | US 5 027 124 A (FITZSIMMONS ET AL.) 25 juin 1991 <br> * abrégé; figures 3-6 * <br> * colonne 9, ligne 34 - ligne 47 * <br> * colonne 10, ligne 41 - colonne 11, ligne 12 * <br> * colonne 11, ligne 43 - colonne 12, ligne 3 * | 1-3 | |
| A | *Idem* | 4-9,12 | DOMAINES TECHNIQUES RECHERCHES (Int.Cl.6) <br><br> G01S <br> H01Q |
| A | US 3 772 701 A (WILKINSON) 13 novembre 1973 <br> * colonne 4, ligne 35 - colonne 5, ligne 18; figures 1,2,4A,4B * | 1-3 | |
| A | US 3 523 294 A (OKAMURA ET AL.) 4 août 1970 <br> * abrégé; revendication 1 * | 1 | |

Le présent rapport a été établi pour toutes les revendications

| Lieu de la recherche | Date d'achèvement de la recherche | Examinateur |
|---|---|---|
| BERLIN | 14 mai 1998 | Danielidis, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03 82 (P04C02)